# EUROPEAN PATENT SPECIFICATION

(11) **EP 0 368 619 B1**
(45) Date of publication and mention of the grant of the patent: **27.03.1996**
(21) Application number: 89311514.7
(22) Date of filing: 07.11.1989
(51) Int. Cl.: C04B 35/00, H01G 4/12

(54) **Dielectric ceramic composition**
Dielektrische keramische Zusammensetzung
Composition céramique diélectrique

(30) Priority: 07.11.1988 JP 280812/88; 08.02.1989 JP 29088/89
(43) Date of publication of application: 16.05.1990
(73) Proprietor: MATSUSHITA ELECTRIC INDUSTRIAL CO., LTD., Kadoma-shi, Osaka-fu, 571 (JP)
(72) Inventor: Kawakita, Kouji, Jerada Kyoto 610-01 (JP); Kimura, Suzushi, Toyonaka Osaka 561 (JP); Okinaka, Hideyuki, Toyonaka Osaka 560 (JP); Yokotani, Youichiro, Suita Osaka 565 (JP); Ishikawa, Mariko, Osaka 550 (JP)
(74) Representative: Spencer, Graham Easdale

(56) References cited:
- EP-A- 0 200 207
- DE-A- 3 732 054
- US-A- 4 711 862
- Japanese Journal of Applied Physics, Vol. 24 (1985), Supplement 24-3, pp. 90- 92; "Dielectric Properties of Pb(Mg1/3Nb2/3)Ti(Ni1/2W1/2)O3 Ceramic" J. KATO et al.
- Chemical Abstracts: Vol. 106, No. 10, Mar (1987) pp 311-312, abstr. no. 71927a; & JP-A-61 155 247

## Description

The present invention is concerned with methods of making dielectric ceramic compositions and thick film capacitors incorporating such compositions.

Ceramic capacitors with a high dielectric constant have hitherto been composed principally of barium titanate; capacitors made of this material have, over a period of time, been progressively reduced in size and increased in capacity. In order to sinter these materials, it is necessary to use high temperatures, that is about 1300°C. This in turn has required that when making layered ceramic capacitors, noble metals, such as platinum and palladium, must be used as the electrode material as only these metals are sufficiently conductive and sufficiently resistant to the sintering conditions. These metals are, of course, expensive and their use has prevented any significant reduction in the cost of such capacitors.

With a view to reducing their cost, ceramic capacitors have been made with a barium titanate material having resistance to reduction and using an inexpensive base metal as the electrode material, sintering being carried out in an atmosphere having a low partial pressure of oxygen. Other capacitors have been made using a lead titanate dielectric material which can be sintered at about 1000°C and a silver-palladium alloy electrode material, the latter being substantially cheaper than pure palladium.

In electronic appliances where reduction in size and enhancement of reliability is required, hybrid ICs of high packing density are increasingly used and conventional chip capacitors are being increasingly replaced by thick film capacitors. To make such thick film capacitors, a dielectric which can be sintered at a relatively low temperature and in a relatively short time is required and lead titanate- and lead zirconate-based dielectric materials are principally used for this purpose. As the materials likely to give rise to increases in the capacity of laminate capacitors and to increases in capacity density, lead titanate- and lead zirconate- based compositions have been the subject of intensive development.

Japanese Published Patent Applications 61-155249 (which corresponds to U.S. Patent 4,711,862) and 61-155248 describe PbTi0₃ - Pb(Mg_{1/3}Nb_{2/3})0₃ - Pb(Ni_{1/2}W_{1/2})0₃ and PbZr0₃ - Pb(Ni_{1/3}Nb_{2/3})0₃ - Pb(Ni_{1/2} W_{1/2})0₃ solid solutions as compositions with a high dielectric constant which can be sintered in the atmosphere at 1100°C or lower. However, with these materials, the sintering temperature must be maintained for several hours in order to increase the dielectric constant and to obtain materials which have a sufficiently dense texture. When making thick film capacitors for hybrid ICs, however, relatively low temperature - short time sintering is essential and the dielectric materials described in these Japanese publications are not sintered completely under such conditions and the desired characteristics are not, therefore, obtained. Further, due to being held for a long time at a high temperature in an inert or a reducing atmosphere, oxygen defects are likely to occur in the dielectric ceramic and these lead to practical problems, such as reductions in the dielectric constant and in the insulation resistance.

U.S. Patent 4,772,985 (corresponding to German Specification 3,732,054 A) describes the production of thick film capacitors comprising a sintered layer of a ferroelectric material consisting essentially of at least one ferroelectric inorganic compound having a perovskite structure and an inorganic binder for sintering the ferroelectric inorganic compound without destroying the perovskite structure thereof, the inorganic binder having a eutectic composition which experiences a liquid phase at a temperature lower than the sintering temperature of the ferroelectric inorganic compound, and the sintered layer being sandwiched between electrodes. The ferroelectric inorganic compound may be, inter alia, lead titanate or lead zirconate.

In view of the very high dielectric constants reported in this U.S. patent, it is apparent that the sintering referred to was effected in air.

European Specification 200207 A describes dielectric compositions comprising Pb(Mg_{1/3}Nb_{2/3})0₃ - PbTi0₃ - Pb(Mn_{1/3}Nb_{2/3})0₃ and a sub-component comprising Pb0 and Zn0.

We have now developed an improved method of making PbTi0₃ - Pb(Mg_{1/3}Nb_{2/3})0₃ - Pb(Ni_{1/2}W_{1/2})0₃ solid solution dielectrics of selected composition; the compositions we have developed can be fully sintered at a temperature of 800° to 1000°C in a relatively short time in an inert or reducing atmosphere without reduction of the intrinsically high dielectric constant of these materials.

According to a first aspect of the present invention, there is provided a method of making a dielectric ceramic composition, which comprises:
(a) mixing starting materials and calcining the mixture to form a calcined powder consisting of PbTiO₃, Pb(Mg_{1/3}Nb_{2/3})O₃ and Pb(Ni_{1/2}W_{1/2})O₃, the composition of the powder falling within a triangular area ABF of the ternary composition diagram of the powder in which the amounts of the above three oxides are expressed in moles and the coordinates of the points A,B and F are as follows

| | PbTiO₃ | Pb(Mg_{1/3}Nb_{2/3})O₃ | Pb(Ni_{1/2}W_{1/2})O₃ |
|---|---|---|---|
| A | 2.5 | 95.0 | 2.5 |
| B | 12.5 | 85.0 | 2.5 |
| F | 20.0 | 70.0 | 10.0 |

(b) sintering the calcined powder at a temperature of from 800°C to 1000°C; characterized in that in step (b), a mixture in mole proportions of 100 mol of the calcined powder from (a), 1.0 to 25.0 mol of PbO and 1.0 to 15.0 mol of NiO is sintered in either a reducing or an inert atmosphere.

By adding a mixture of PbO and NiO to the calcined powder of the PbTiO₃-Pb(Mg_{1/3}Nb_{2/3})O₃-Pb(Ni_{1/2}W_{1/2})O₃ system, a liquid phase corresponding to the eutectic formed between PbO and NiO is generated at a low temperature in the sintering stage and smoothly diffuses into the dielectric so that the formation of grain boundary layers due to the additives is avoided. It is, therefore, possible to obtain high capacity, dense materials by sintering for only a relatively short time at a sintering temperature of not more than 1000°C.

In the following description, reference will be made to the accompanying drawings, in which:

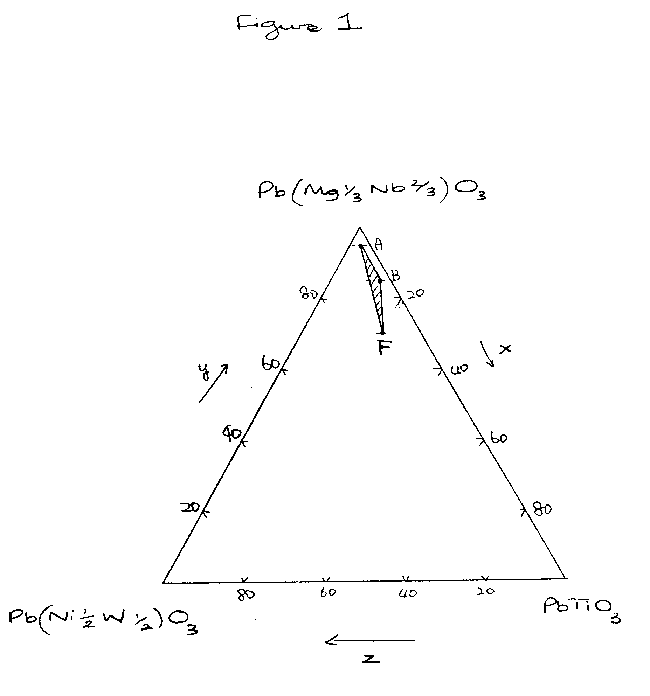

Fig. 1 is a ternary composition diagram showing compositions based on three oxides, PbTiO₃, Pb(Mg_{1/3}Nb_{2/3})O₃ and Pb(Ni_{1/2}W_{1/2})O₃, the proportions of which are expressed as moles, as present in the first embodiment of the invention.

In order that the invention may be more fully understood, the following examples, in which all percentages are by weight unless otherwise indicated, are given by way of illustration only.

### Example 1

PbO, MgO, Nb₂O₅, TiO₂, NiO and WO₃ of high purity were used as the starting materials. After checking their purity, the required amounts of these materials were weighed out, purified water was added, and the mixture was mixed in a ball mill having agate balls for 17 hours. The majority of the water was separated by suction filtration, the residue was dried and sufficiently crushed in an automatic agate mortar and 5 wt.% of purified water, based on the weight of the powder, was added. The moistened powder was formed into a columnar shape 60 mm in diameter and about 50 mm in height at a forming pressure of 500 kg/cm². The pressed shape was placed in an aluminium crucible, the crucible was closed with a lid of the same material, and the shape was calcined at 750 to 1000°C for 2 hours. The calcined material was coarsely crushed in an alumina mortar and further crushed in a ball mill for 17 hours and was then dried after suction filtration. These steps of calcining, crushing and drying were repeated several times. The final powder was subjected to X-ray analysis and the perovskite phase was observed.

PbO and NiO were added to the powder and were mixed in an automatic agate mortar, 6 wt.% of a 6 wt.% aqueous polyvinyl alcohol solution was added to the powder, based on the weight of the latter, and the mixture was granulated through a 32 mesh sieve and the granules were formed into a disc having a diameter of 13 mm and a height of about 5 mm at a forming pressure of 1000 kg/cm². The pressed disc was heated at 600°C in air for 1 hour to remove the binder and was then placed in a magnesia ceramic container which was closed with a lid of the same material. The disc and container were then heated up to specified temperature at a rate of 2400°C/hour in an inert or reducing atmosphere and, after holding the maximum temperature for 5 to 30 minutes, they were cooled at a rate of 2400°C/hour.

The sintered disc thus obtained was processed into a disc of 1 mm thickness and Cr-Au was evaporated on to both sides as an electrode, and the dielectric constant and tan δ were measured in an electric field of 1kHz, 1V/mm.

The results of sintering at 900°C in an inert atmosphere of nitrogen and in a reducing atmosphere provided by a nitrogen-hydrogen mixture having an oxygen partial pressure of 1.01 x 10⁻³ Pa (10⁻⁸ atm) are shown in Tables 1 and 2 respectively. Some of the Examples given in the table are outside the scope of the present invention, but are included as comparative examples.

**〈 Table 1 〉**

| No. | Principal dielectric composition | | | Subsidiary component | | Dielectric constant (20°C) | tan δ (20°C) [%] |
|---|---|---|---|---|---|---|---|
| | PbTiO₃ (mol%) | Pb(Mg_{1/3} Nb_{2/3})O₃ (mol%) | Pb(Ni_{1/2} W_{1/2})O₃ (mol%) | PbO (mol%) | NiO (mol%) | | |
| 1* | 20.0 | 70.0 | 10.0 | 0 | 0 | 1720 | 6.5 |
| 2* | 20.0 | 70.0 | 10.0 | 0.5 | 0.5 | 3070 | 5.3 |
| 3 | 20.0 | 70.0 | 10.0 | 1.0 | 1.0 | 9020 | 6.2 |
| 4 | 20.0 | 70.0 | 10.0 | 10.0 | 5.0 | 12250 | 6.9 |
| 5 | 20.0 | 70.0 | 10.0 | 25.0 | 15.0 | 8860 | 5.0 |
| 6* | 20.0 | 70.0 | 10.0 | 30.0 | 25.0 | 3520 | 5.3 |
| 7 | 2.5 | 95.0 | 2.5 | 10.0 | 5.0 | 8790 | 6.8 |
| 8 | 12.5 | 85.0 | 2.5 | 10.0 | 5.0 | 11220 | 6.0 |
| 9* | 60.0 | 10.0 | 30.0 | 10.0 | 5.0 | 6000 | 5.2 |
| 10* | 40.0 | 10.0 | 50.0 | 10.0 | 5.0 | 6380 | 3.5 |
| 11 | 2.5 | 90.0 | 7.5 | 10.0 | 5.0 | 6820 | 2.3 |

| | | | | | | | |
|---|---|---|---|---|---|---|---|
| * The asterisked specimens are reference examples. | | | | | | | |

**〈 Table 2 〉**

| No. | Principal dielectric composition | | | Subsidiary component | | Dielectric constant (20°C) | tan δ (20°C) [%] |
|---|---|---|---|---|---|---|---|
| | PbTiO₃ (mol%) | Pb(Mg_{1/3} Nb_{2/3})O₃ (mol%) | Pb(Ni_{1/2} W_{1/2})O₃ (mol%) | PbO (mol%) | NiO (mol%) | | |
| 1* | 20.0 | 70.0 | 10.0 | 0 | 0 | 1520 | 8.0 |
| 2* | 20.0 | 70.0 | 10.0 | 0.5 | 0.5 | 3060 | 7.8 |
| 3 | 20.0 | 70.0 | 10.0 | 1.0 | 1.0 | 7950 | 5.9 |
| 4 | 20.0 | 70.0 | 10.0 | 10.0 | 5.0 | 9860 | 5.1 |
| 5 | 20.0 | 70.0 | 10.0 | 25.0 | 15.0 | 8680 | 5.3 |
| 6* | 20.0 | 70.0 | 10.0 | 30.0 | 25.0 | 3950 | 5.9 |
| 7 | 2.5 | 95.0 | 2.5 | 10.0 | 5.0 | 7960 | 6.0 |
| 8 | 12.5 | 85.0 | 2.5 | 10.0 | 5.0 | 9890 | 6.3 |
| 9* | 60.0 | 10.0 | 30.0 | 10.0 | 5.0 | 6420 | 8.6 |
| 10* | 40.0 | 10.0 | 50.0 | 10.0 | 5.0 | 6350 | 3.5 |
| 11 | 2.5 | 90.0 | 7.5 | 10.0 | 5.0 | 7090 | 2.9 |

| | | | | | | | |
|---|---|---|---|---|---|---|---|
| * The asterisked specimens are reference examples. | | | | | | | |

It can be seen from Tables 1 and 2 that materials made in accordance with the invention were dense and had high dielectric constants despite the relatively short sintering times at 900°C and in various atmospheres.

It can be further seen from these Tables that compositions in which the amounts of the three oxides PbTiO₃, Pb(Mg_{1/3}Nb_{2/3})O₃ and Pb(Ni_{1/2}W_{1/2})O₃ fall outside the area ABF in Fig. 1 did not give sintered products which were as satisfactory as those produced from compositions in which the amounts of the three oxides fall inside area ABF in Figure 1. At a sintering temperature of 900°C, the products from compositions outside the area ABF in Figure 1 had dielectric constants of less than 6420. Further, at a sintering temperature of 800°C or less, sintering is insufficient and at 1000°C or higher, the dielectric constant of the products is less and the desired characteristics are not obtained.

### Example 2.

The procedure of Example 1 was followed to form calcined powders, PbO and NiO were added and mixed with added water in a ball mill and the mixture was dried. An organic solvent solution of ethyl cellulose was added to the dried mixture and the resulting composition was kneaded by passing through three stage rolls to give a dielectric paste.

A copper electrode was printed and dried on the surface of a 96% pure alumina substrate (to form a lower electrode) having the dimensions 2 x 2 mm. The dielectric paste was printed onto the copper layer and dried in two stages to form a dielectric layer having a thickness of 50 to 60 um. A further copper layer was printed on the surface of the dielectric layer and dried to form the upper electrode. The assembly of substrate, lower electrode, dielectric layer, and upper electrode was sintered in a nitrogen atmosphere at a maximum temperature of from 800°C to 1000°C, for 5 to 30 minutes, on a conveyor furnace. The dielectric constant and the tan δ of the thick film capacitors thus obtained were measured in an electric field of 1 kHz, 1V/mm.

The compositions used and the dielectric characteristics of the specimens sintered at 900°C in nitrogen are shown in Table 3.

**〈 Table 3 〉**

| No. | Principal dielectric composition | | | Subsidiary component | | Dielectric constant (20°C) | tan δ (20°C) [%] |
|---|---|---|---|---|---|---|---|
| | PbTiO₃ (mol%) | Pb(Mg_{1/3} Nb_{2/3})O₃ (mol%) | Pb(Ni_{1/2} W_{1/2})O₃ (mol%) | PbO (mol%) | NiO (mol%) | | |
| 1* | 20.0 | 70.0 | 10.0 | 0 | 0 | 1530 | 8.9 |
| 2* | 20.0 | 70.0 | 10.0 | 0.5 | 0.5 | 2980 | 6.8 |
| 3 | 20.0 | 70.0 | 10.0 | 1.0 | 1.0 | 7620 | 5.8 |
| 4 | 20.0 | 70.0 | 10.0 | 10.0 | 5.0 | 8320 | 4.8 |
| 5 | 20.0 | 70.0 | 10.0 | 25.0 | 15.0 | 6250 | 4.2 |
| 6* | 20.0 | 70.0 | 10.0 | 30.0 | 25.0 | 3500 | 6.2 |
| 7 | 2.5 | 95.0 | 2.5 | 10.0 | 5.0 | 6360 | 5.3 |
| 8 | 12.5 | 85.0 | 2.5 | 10.0 | 5.0 | 6950 | 4.9 |
| 9* | 60.0 | 10.0 | 30.0 | 10.0 | 5.0 | 5260 | 4.9 |
| 10* | 40.0 | 10.0 | 50.0 | 10.0 | 5.0 | 5100 | 5.9 |
| 11 | 2.5 | 90.0 | 7.5 | 10.0 | 5.0 | 5120 | 2.9 |

| | | | | | | | |
|---|---|---|---|---|---|---|---|
| * The asterisked specimens are reference examples. | | | | | | | |

It can be seen from Table 3 that the use of materials made in accordance with the invention gave thick film capacitors having a high dielectric constant despite the relatively short time and low temperature sintering conditions.

This Table also shows that compositions outside the area shown in Fig. 1 gave lower dielectric constants than compositions inside the area ABF in Figure 1 under the sintering conditions used.

The procedure of this example used sintering in nitrogen, but it will be understood that an inert atmosphere provided by argon, helium or the like could equally be used.

Electrodes other than copper can equally be used provided that the electrode material can withstand sintering at 800°C to 1000°C in an inert or reducing atmosphere.

## Claims

1. A method of making a dielectric ceramic composition, which comprises:
(a) mixing starting materials and calcining the mixture to form a calcined powder consisting of PbTiO₃, Pb(Mg_{1/3}Nb_{2/3})O₃ and Pb(Ni_{1/2}W_{1/2})O₃, the composition of the powder falling within a triangular area ABF of the ternary composition diagram of the powder in which the amounts of the above three oxides are expressed in moles and the coordinates of the points A,B and F are as follows
| | PbTiO₃ | Pb(Mg_{1/3}Nb_{2/3})O₃ | Pb(Ni_{1/2}W_{1/2})O₃ |
|---|---|---|---|
| A | 2.5 | 95.0 | 2.5 |
| B | 12.5 | 85.0 | 2.5 |
| F | 20.0 | 70.0 | 10.0 |
(b) sintering the calcined powder at a temperature of from 800°C to 1000°C: characterized in that in step (b), a mixture in mole proportions of 100 mol of the calcined powder from (a), 1.0 to 25.0 mol of PbO and 1.0 to 15.0 mol of NiO is sintered in either a reducing or an inert atmosphere.

2. A method of making a thick film capacitor, which comprises carrying out step (a) of claim 1 and then:
(b) preparing a paste comprising a mixture in mole proportions of 100 mol of the calcined powder from (a) 1.0 to 25.0 mol of PbO , and 1.0 to 15.0 mol of NiO,
(c) forming a layer of the paste from (b) on a copper electrode which is supported on a ceramic substrate,
(d) providing another copper electrode on the surface of the paste layer, and
(e) sintering the assembly from (d) in either a reducing or an inert atmosphere at a temperature of from 800° to 1000°C.

## Patentansprüche

1. Eine Vorgangsweise zur Herstellung einer dielektrischen Keramikzusammensetzung, bestehend aus:
(a) Vermischen von Ausgangsstoffen und Ausglühen der Mischung, um ein ausgeglühtes Pulver, bestehend aus PbTi0₃, Pb(Mg_{1/3}Nb_{2/3})0₃ und Pb(Ni_{1/2}W_{1/2})0₃ zu bilden, wobei die Zusammensetzung des Pulvers in einen dreieckigen Bereich ABF des ternären Zusammensetzungsbildes des Pulvers fällt, in dem die Mengen der o.g. drei Oxiden in Mol ausgedrückt werden und die Koordinaten der Punkte A, B und F wie folgt sind:
| | PbTi0₃ | Pb(Mg_{1/3}Nb_{2/3})0₃ | Pb(Ni_{1/2}W_{1/2})0₃ |
|---|---|---|---|
| A | 2,5 | 95,0 | 2,5 |
| B | 12,5 | 85,0 | 2,5 |
| F | 20,0 | 70,0 | 10,0 |
(b) Sintern des ausgeglühten Pulvers bei einer Temperatur zwischen 800°C und 1000°C; dadurch gekennzeichnet, daß in Schritt (b) eine Mischung in Molverhältnissen von 100 Mol ausgeglühten Pulvers aus (a), 1,0 bis 25,0 Mol Pb0 und 1,0 bis 15,0 Mol Ni0 entweder in einer reduzierenden oder unwirksamen Atmosphäre gesintert wird.

2. Eine Vorgangsweise zur Herstellung eines Dickfilmkondensators, bestehend aus dem Durchführen des Schrittes (a) von Anspruch 1, dann:
(b) Zubereiten einer Paste, bestehend aus einer Mischung in Molverhältnissen von 100 Mol ausgeglühten Pulvers aus (a), 1,0 bis 25,0 Mol Pb0 und 1,0 bis 15,0 Mol Ni0.
(c) Bilden einer Schicht der Paste aus (b) auf einer Kupferelektrode, die auf einem Keramiksubstrat getragen wird,
(d) Vermitteln einer weiteren Kupferelektrode auf einer Oberfläche der Pastenschicht und
(e) Sintern der Baugruppe aus (d), entweder in einer reduzierenden oder einer unwirksamen Atmosphäre bei einer Temperatur zwischen 800° und 1000°C.

## Revendications

1. Une méthode pour faire une composition diélectrique en céramique, qui comprend:
a) le mélange des matériaux de départ et la calcination du mélange pour former une poudre calcinée consistant en PbTi0₃, Pb(Mg_{1/3}Nb_{2/3})0₃ et Pb(Ni_{1/2}W_{1/2})0₃, la composition de la poudre tombant dans une zone triangulaire ABF du diagramme de la composition ternaire de la poudre dans laquelle les quantités des trois oxydes ci-dessus sont exprimées en môles et les coordonnées des points A, B et F sont comme suit:
| | PbTi0₃ | Pb(Mg_{1/3}Nb_{2/3})0₃ | Pb(Ni_{1/2}W_{1/2})0₃ |
|---|---|---|---|
| A | 2,5 | 95,0 | 2,5 |
| B | 12,5 | 85,0 | 2,5 |
| F | 20,0 | 70,0 | 10,0 |
b) le frittage de la poudre calcinée à une température allant de 800°C à 1000°C; caractérisée par le fait que dans la phase (b), un mélange en proportions molaires de 100 môles de la poudre calcinée de (a), 1,0 à 25,0 môles de Pb0 et 1,0 à 15,0 môles de Ni0 est fritté dans une atmosphère soit réductrice soit inerte.

2. Une méthode pour faire un condensateur à film épais, qui comprend l'exécution de la phase (a) de la revendication 1 et ensuite:
(b) la préparation d'une pâte comprenant un mélange en proportions molaires de 100 môles de la poudre calcinée de (a) 1,0 à 25,0 môles de Pb0 et 1,0 à 15,0 môles de Ni0.
(c) la formation d'une couche de la pâte depuis (b) sur une électrode en cuivre qui est supportée sur un substrat en céramique,
(d) la provision d'une autre électrode en cuivre sur la surface en couche de pâte, et
(e) le frittage de l'assemblage depuis (d) soit en une atmosphère réductrice, soit inerte, à une température allant de 800° à 1000°C.
